# EUROPÄISCHE PATENTSCHRIFT

(11) **EP 0 991 534 B1**
(45) Veröffentlichungstag und Bekanntmachung des Hinweises auf die Patenterteilung: **04.09.2002**
(21) Anmeldenummer: 99927697.5
(22) Anmeldetag: 21.04.1999
(51) Int. Cl.: B60G 1/00

(54) **GUMMIGELAGERTES KUGELGELENK MIT SPANNUNGSOPTIMIERTER LAGERGEOMETRIE**
RUBBER-CUSHIONED BALL JOINT WITH A BEARING GEOMETRY WHICH IS OPTIMIZED WITH REGARD TO TENSION
JOINT A ROTULE MONTE DANS UN PALIER EN CAOUTCHOUC, PRESENTANT UNE GEOMETRIE DE PALIER OPTIMISEE EN CE QUI CONCERNE LES TENSIONS

(30) Priorität: 23.04.1998 DE 19818161; 22.07.1998 DE 19832956
(43) Veröffentlichungstag der Anmeldung: 12.04.2000
(73) Patentinhaber: ZF Lemförder Metallwaren AG, 49448 Lemförde (DE)
(72) Erfinder: KAMMEL, Helmut, D-49401 Damme (DE); SICHLER, Axel, D-49492 Westerkappeln (DE)
(86) Internationale Anmeldenummer: DE9901200
(87) Internationale Veröffentlichungsnummer: WO99055543

(56) Entgegenhaltungen:
- DE-A- 2 838 391
- DE-U- 8 620 178
- FR-A- 2 634 839
- FR-A- 2 649 171
- US-A- 3 843 272

## Beschreibung

Die vorliegende Erfindung betrifft ein gummigelagertes Kugelgelenk, dessen Innenteil gegen das Außenteil durch ein Elastomer isoliert ist und bei dem im Innenteil ein an seinem Ende eine Gelenkkugel aufweisender Gelenkzapfen gelagert ist.

Im Automobilbau für die Fahrwerksaufhängung verwendete Lager und Gelenke werden bekanntlich unter anderem durch Scherkräfte, Vibrationen und Beschleunigungskräfte besonders stark beansprucht. Es ist daher bekannt, die beispielsweise durch Fahrbahnunebenheiten verursachten Schwingungen durch die Verwendung von Elastomeren in den Lagern bzw. Gelenkkörpern zu dämpfen. Bei geeigneter Auswahl der Elastomere wird gleichzeitig eine Verbesserung der Akustik, d.h. eine Geräuschisolierung gegen die durch die Schwingungen verursachten Laufgeräusche erreicht.
So ist beispielsweise aus der DE 28 38 391 ein Gummilager mit einer speziellen Geometrie bekannt, bei dem die Mantelflächen des inneren und äußeren Lagerteils in bezug auf die Lagerachse schräg verlaufen. Nach der Lehre der Schrift wird hierdurch eine Art Gleitrampe gebildet, wodurch die in Kurvenfahrten auftretenden und axial in das Lager eingeleiteten Kräfte zu einer Radialverschiebung zwischen dem äußeren und dem inneren Lagerteil und somit zu einem Verschwenken des für ein Radführungsglied eingesetzten Lagers führen.
Aus der DE 33 46 665 ist weiterhin ein elastisches Lager mit einer Zwangsführung bekannt. Bei dem beschriebenen Lager ist zwischen einer inneren und einer äußeren Hülse des Lagers ein speziell geformter und vorgespannter Gelenkkörper aus einem elastischen Werkstoff eingeordnet. Durch die Ausbildung des Gelenkkörpers wird eine Zwangsführung bei kardanischen Auslenkbewegungen erreicht.
Für Gelenkverbindungen von Teilen der Radaufhängungen bei Kraftfahrzeugen ist der Einsatz von Kugelgelenken bekannt. In der Regel sind beim Einsatz der Lager sowohl das Gehäuse als auch der Gelenkzapfen des Kugelgelenks starr mit den Fahrwerksteilen verbunden, wodurch Erschütterungen bzw. Schwingungen in unerwünschter Weise unmittelbar auf das Fahrwerk übertragen würden. Es ist daher beispielsweise aus dem gattungsbildenden deutschen Gebrauchsmuster G 86 20 178.6 bekannt, die auftretenden Antriebs- und Abbremsschwingungen durch den Einsatz einer Gummilagerung zu dämpfen. Bei der beschriebenen Lösung ist auf den annähernd zylindrisch gestalteten Gehäusemantel des Kugelgelenkes ein Gummimetallager aufgepreßt, welches aus einer Innenhülse, einer mit dem Fahrwerk verbundenen Außenhülse und einer zwischen der Innen- und der Außenhülse eingeordneten Gummischicht besteht. Aufgrund der enormen Beanspruchung des Gummis ist es wünschenswert, zur Erhöhung der Lebensdauer des Lagers möglichst große Anlageflächen für den Elastomerwerkstoff am Innen- und am Außenteil auszubilden. Dem steht jedoch die begrenzte Lagergeometrie eines solchen Lagers für ein Kugelgelenk entgegen, welche sich neben Gründen der Platzersparnis auch daraus ergibt, daß der Gelenkzapfen stets in einem hinreichend großen Winkel schwenkbar gelagert sein muß.

Technische Problemstellung der vorliegenden Erfindung ist es daher, die Lagergeometrie eines solchen gummigelagerten Kugelgelenks so zu verändern, daß ein hinreichend großer Schwenkwinkel für den Lagerzapfen gewährleistet ist und gleichzeitig die Anlageflächen für den Elastomerwerkstoff am Innen- und am Außenteil zur Erhöhung seiner Lebensdauer vergrößert werden.

Diese technische Problemstellung wird durch die kennzeichnenden Merkmale des Patentanspruches 1 gelöst.
Vorteilhafte Ausgestaltungen der Erfindung sind Gegenstand der Unteransprüche.

Durch die Verlängerung der Lagergeometrie an der dem Gelenkzapfen gegenüberliegenden Seite wird erfindungsgemäß ein Versatz zwischen der Drehachse des Lagers und der Drehachse des Gelenkes erreicht. Die Verlängerung des Lagers führt zu einer Vergrößerung und damit zu einer erhöhten Lebensdauer des Elastomers. Bei einer herkömmlichen Lagergeometrie würde jedoch die Lagerverlängerung bei entsprechenden angreifenden Radialkräften zu einer unerwünschten Verdrehung des Lager-Innenteils in dem Außenteil führen. Dem wird nach der Lehre der Erfindung durch die konische Gestaltung des Lagers auf der Seite seiner Verlängerung entgegengewirkt. Der Versatz zwischen den Drehachsen und die gleichzeitige konische Gestaltung des Lagers haben im Lagerinnern eine abstützende Wirkung in Hinblick auf radial einwirkende und damit Drehmomente verursachende Kräfte zur Folge, wodurch sich eine höhere Belastbarkeit des Lagers in bezug auf die angreifenden Drehmomente ergibt.
Es ist im Sinne der Erfindung, daß dabei die Außenkontur des Lager-Innenteils in einem Neigungswinkel β und die Außen- und Innenkontur des Außenteils in einem Neigungswinkel χ gegen die Lagerachse konisch erweitert sind.
Gemäß einer weiteren Ausgestaltung der Erfindung ist die Außenkontur des Innenteils, etwa beginnend im Bereich der Achse des Lagers, konisch in Richtung der Lagerverlängerung erweitert.
Besonders vorteilhaft läßt sich die für die einwirkenden Drehmomente günstige Höhe des Elastomers durch gezielte Verhältnisse zwischen dem Neigungswinkel der Außenkontur des Innenteils und dem Neigungswinkel des Außenteils und eine daran angepaßte Ausformung des Elastomers realisieren. Es ist daher eine vorteilhafte Ausgestaltung des erfindungsgemäßen Lagers dadurch gegeben, daß der Neigungswinkel der konischen Erweiterung der Außenkontur des Innenteils geringer ist als der Neigungswinkel für die Erweiterung des Außenteils. Hierdurch ergibt sich im Außenbereich des Lagers eine größere Höhe des Gummikörpers als in der auf die Lagerlängsachse bezogenen Lagermitte. Somit wird den größeren Federwegen im Lageraußenbereich bzw. den hier auftretenden Kräften in besonders vorteilhafter Weise Rechnung getragen. Unter Berücksichtigung der durch den jeweiligen Einsatzzweck bedingten Belastungen des Lagers ist es vorteilhaft, wenn die Neigungswinkel des Innen- und Außenteils entsprechend einer weiteren Ausgestaltung des erfindungsgemäßen Lagers bereichsweise variieren. Hierdurch kann die Höhe des Elastomers in optimaler Weise an den im Lager entsprechend dem Einsatzfall tatsächlich auftretenden Kräfteverlauf angepaßt werden. Auch das Vorsehen von Ausnehmungen an einzelnen Stellen des Elastomers ermöglicht eine auf die jeweilige Beanspruchung ausgerichtete optimale Festlegung der Höhe des Elastomers bzw. Gummis. Eine besonders vorteilhafte Ausgestaltung des Lagers weist eine Ausfallsicherung auf, die dadurch erreicht wird, daß der maximale Außendurchmesser des Lager-Innenteils größer ist als der maximale Innendurchmesser des Lageraußenteils. Zur besseren Aufnahme axial wirkender Kräfte und zur Vermeidung von die Lebensdauer herabsetzenden Zugspannungen weist eine weitere Ausgestaltung des erfindungsgemäßen Lagers an der dem herausragenden Gelenkzapfen gegenüberliegenden Stirnseite einer Anschlagfläche für das Innenteil auf. Im Sinne der Erfindung ist weiterhin eine Lagergeometrie, bei der das Innen- und Außenteil sich beidseitig konisch erweiternd gestaltet sind.

Ein gummigelagertes Kugelgelenk mit den zuvor beschriebenen technischen Merkmalen, wurde dahingehend weiterentwickelt, daß wenigstens auf einer Seite des Kugelgelenkes mindestens ein Einsatz mit einer verglichen mit dem Elastomer geringeren Shorehärte in das Elastomer eingefügt ist. Nach der Erfindung soll demnach ein weichelastischer Einsatz vorgesehen werden, der eine mehrfach größere Kompressibilität aufweist, als das den Einsatz aufnehmende, grundsätzlich inkompressible Elastomer.
Dadurch können die insbesondere an den Lagerenden im Elastomer auftretenden, im Elastomer zu unerwünscht starken Verformungen führenden Spannungen vermindert werden, sodaß die Lebensdauer eines Kugelgelenkes mit einem erfindungsgemäßen Einsatz weiter erhöht wird. Durch die erfindungsgemäße Ausführung werden die Lagereigenschaften verbessert, ohne daß bauliche Änderungen, insbesondere der Abmaße, vorgenommen werden müssen.

Als weitere Ausgestaltung der Erfindung können mehrere Einsätze über den Umfang des Elastomers verteilt angeordnet sein. Dadurch kann nahezu jede fahrzeugspezifische Lagerungscharakteristik erreicht werden.
Der Einsatz oder die Einsätze können in das Elastomer einvulkanisiert oder nachträglich in das fertiggestellte Elastomer eingesetzt werden.

Um das selbsttätige Lösen des Einsatzes aus dem Elastomer zu verhindern, kann dieser ebenso mit dem Elastomer verklebt sein oder mit einem zusätzlichen, beispielsweise keilförmigen Sicherungselement in dem Elastomer festgelegt werden, das zwischen Elastomer und Einsatz eingefügt wird.

Darüber hinaus sieht eine weitere Ausgestaltung der Erfindung vor, den Einsatz aus mehreren, miteinander verbundenen Komponenten herzustellen, deren Verbindung durch einen Pressverband oder an sich bekannte Verbundverfahren erfolgen kann und von denen wenigstens eine eine hohe Rauheit aufweist. Somit wird zwischen dem Einsatz und dem Elastomer zumindest an einer Berührungsfläche ein Reibschluß erreicht, der dem selbsttätigen Lösen des Einsatzes aus dem Elastomer entgegenwirkt.

Zur Beeinflussung der Lagerungscharakteristik ist es ferner möglich, den wenigstens einen Einsatz zumindest bereichsweise mit Ausnehmungen auszustatten.

Sofern der Einsatz nachträglich in das fertiggestellte Elastomer eingesetzt werden soll, ist es ebenso vorteilhaft, zur Sicherung des Einsatzes in dem Elastomer zumindest bereichsweise eine radial gerichtete Materialanhäufung des Elastomers vorzusehen, die in eine komplementär geformte Ausnehmung des wenigstens einen Einsatzes eingreift. Auch durch diese erfindungsgemäße Ausgestaltung wird in einfacher Weise ein selbsttätiges Lösen des Einsatzes aus dem Elastomer verhindert.

Um die Montage des Einsatzes zu erleichtern, kann darüber hinaus der wenigstens eine Einsatz zumindest an seinem gelenkinnenseitigen Randbereich angephast sein.

Selbstverständlich können die vorstehend genannten und die nachfolgend noch zu erläuternden Merkmale der Erfindung nicht nur in der jeweils angegebenen Kombination, sondern auch in anderen Kombinationen oder in Alleinstellung verwendet werden, ohne dabei den Rahmen der Erfindung zu verlassen.

Die Erfindung soll nun anhand eines Ausführungsbeispiels näher erläutert werden. In der zugehörigen Zeichnung zeigen:
- Figur 1: Das erfindungsgemäße Lager in einer Schnittdarstellung
- Figur 2: Die Schnittdarstellung eines gummigelagerten Kugelgelenks nach dem Stand der Technik
- Figur 3: Eine Darstellung des Lagers unter Verdeutlichung der am Lager auftretenden Kräfte und Drehmomente
- Figur 4: Eine Ausgestaltung des Lagers nach der Figur 1 mit einem das Lager auf der dem Gelenkzapfen gegenüberliegenden Seite verschließenden Deckel und einem Dichtungsbalg
- Figur 5: Ein weiteres erfindungsgemäßes Kugelgelenk in einer Schnittdarstellung. und
- Figur 6: Ein weiteres erfindungsgemäßes Kugelgelenk ahnlich Figur 5 in einer Schnittdarstellung.

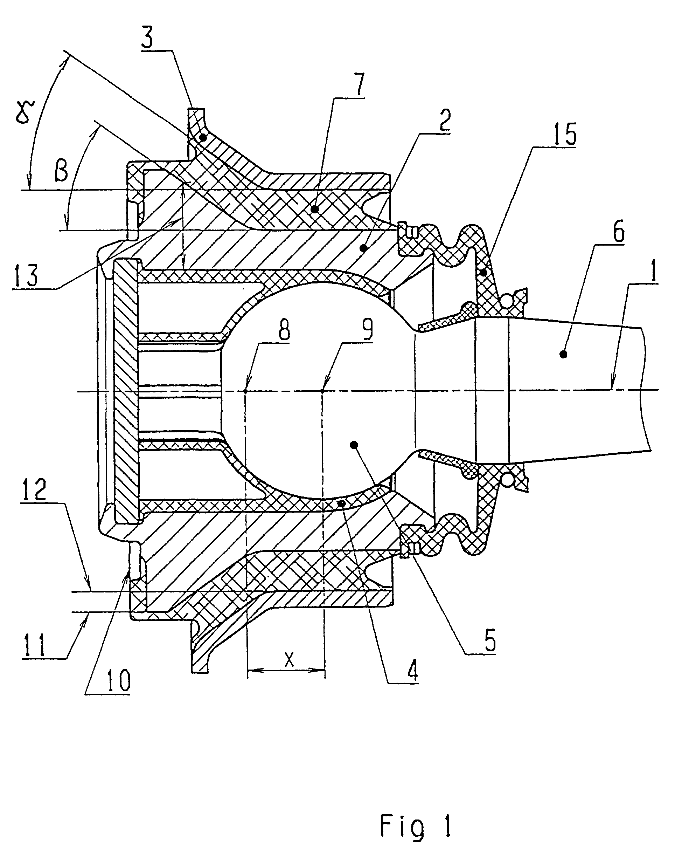

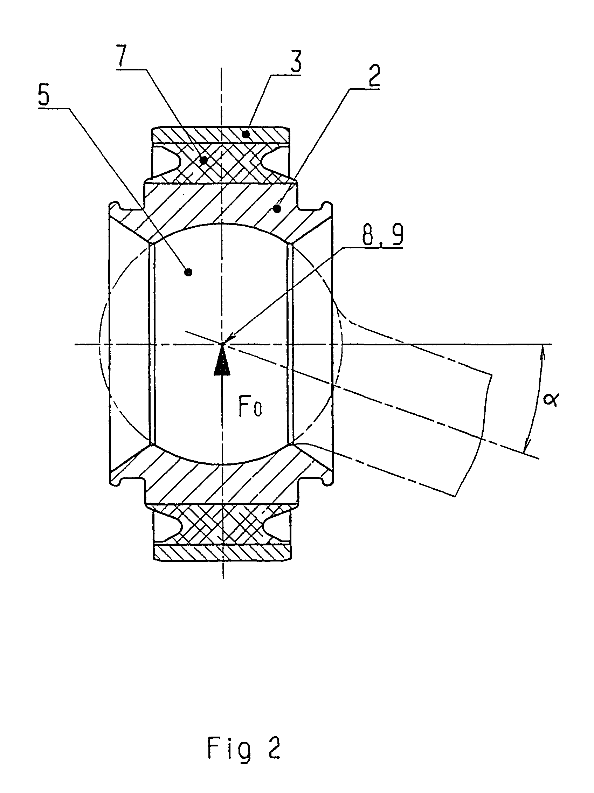

Die Figur 1 verdeutlicht die Geometrie des erfindungsgemäßen Lagers anhand einer Schnittdarstellung mit einem durch die Lagerachse 1 geführten Schnitt. Für Kugelgelenke ist bisher aus dem Stand der Technik eine Lagerung gemäß der Figur 2 bekannt, bei der die Drehpunkte 8, 9 des Lagers und des Gelenks bezogen auf die axiale Richtung örtlich zusammenfallen. Mit der an seinem Ende ausgebildeten Gelenkkugel 5 ist ein Gelenkzapfen 6 in der Lagerschale 4 des Innenteils 2 eines Gummimetallagers gelagert. Dieses Innenteil 2 bildet gleichzeitig das Gehäuse des Kugelgelenks. Zwischen dem Innen- und Außenteil 2, 3 des Lagers ist ein Elastomer 7 in bekannter Weise eingeordnet. Der Gelenkzapfen 6 des Kugelgelenks kann entsprechend der an ihm radial angreifenden Kräfte im Winkel α ausschwenken. Um die Größe des Ausschwenkwinkels α zu bewahren, kommt eine Verlängerung des Lagers auf der Seite des Gelenkzapfens 6 nicht in Betracht. Das erfindungsgemäße Lager wurde daher auf der dem herausragenden Gelenkzapfen 6 gegenüberliegenden Seite verlängert. Durch diese Verlängerung ergibt sich ein Versatz X zwischen dem Drehpunkt 8 des Lagers und dem Drehpunkt 9 des Kugelgelenks.
Zur Vermeidung von Zugspannungen in dem Elastomer 7 bzw. Gummi ist, wie aus der Figur 1 ersichtlich, an der Stirnseite der Lagerverlängerung eine Anschlagfläche 10 für das Lager-Innenteil 2 ausgebildet. Durch diese Anschlagfläche und die konische Gestaltung des Lagers werden axiale Kräfte in einer für den Gummi günstigen Weise aufgenommen. Durch die erfindungsgemäße Lagergeometrie ergibt sich außerdem in Bezug auf einwirkende Radialkräfte eine günstige gleichmäßige Spannungsverteilung im Elastomer 7.

Im Falle der Figur 2 würde sich bei einer einseitigen Lagerverlängerung unter gleichzeitiger Beibehaltung der sonstigen Lagergeometrie bei der Einleitung größerer radialer Kräfte eine unerwünschte Verdrehung des Lager-Innenteils 2 in dem Außenteil 3 ergeben. Dies rührt daher, daß das Lager in Folge des Versatzes X zwischen den Drehpunkten 8, 9 größeren Belastungen durch auftretende Drehmomente ausgesetzt ist.

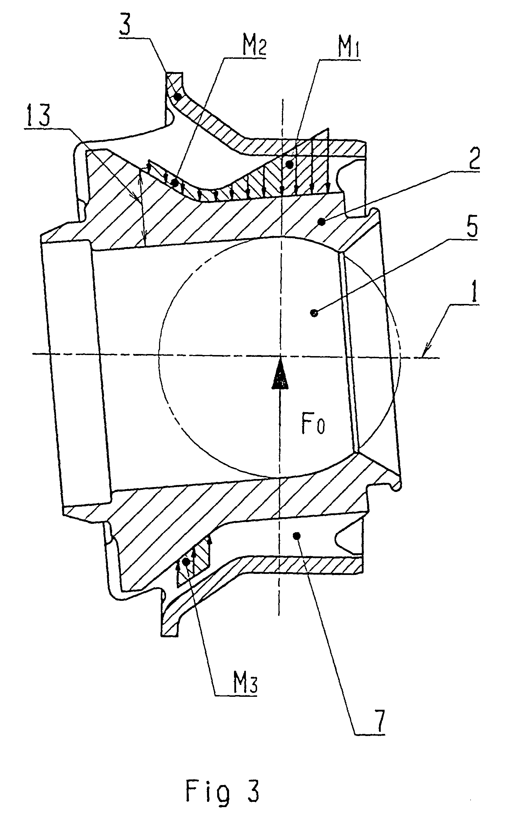

In der Figur 3 sind die am Lager auftretenden Kräfte bzw. Drehmomente zur Verdeutlichung dargestellt. Der durch die auftretenden Drehmomente resultierenden Neigung des Innenteils 2 sich in dem Außenteil 3 zu verdrehen, wird erfindungsgemäß durch die gewählte Lagergeometrie, bei der sich, wie aus der Fig 1 ersichtlich, sowohl das Lager-Innenteil 2 hinsichtlich seiner Außenkontur, als auch das Lager-Außenteil 3 konisch erweitern, entgegengewirkt. Dabei ist durch die Geometrie entsprechend der Erfindung, wie in der Figur 3 verdeutlicht, eine abstützende Wirkung zur Aufnahme der angreifenden Drehmomente gegeben.

Durch die für die konische Erweiterung des Innenteils 2 bzw. des Außenteils 3 jeweils zu wählenden Neigungswinkel β bzw. χ wird die an einem jeweiligen axialen Ort gegebene Höhe 13 des Elastomers 7 bestimmt. Besonders zweckmäßig ist es daher, wenn der Neigungswinkel β für die konische Erweiterung des Innenteils 2 geringer ist als der Neigungswinkel χ des Außenteils 3. Bei einer solchen Geometrie ist die Gummihöhe 13 in dem dem Gelenkzapfen 6 gegenüberliegenden Außenbereich des Lagers erhöht, was in günstiger Weise den hier vorhandenen großen Federwegen Rechnung trägt und die Aufnahme der wirkenden großen Kräfte begünstigt. Es ist aber auch möglich, die Neigungswinkel β, χ in einzelnen Bereichen der axialen Erstreckung des Lagers zu variieren und so gezielt die jeweilige Höhe 13 des Elastomers 7 an die Beanspruchungen des Lagers im jeweiligen speziellen Einsatzfall anzupassen.

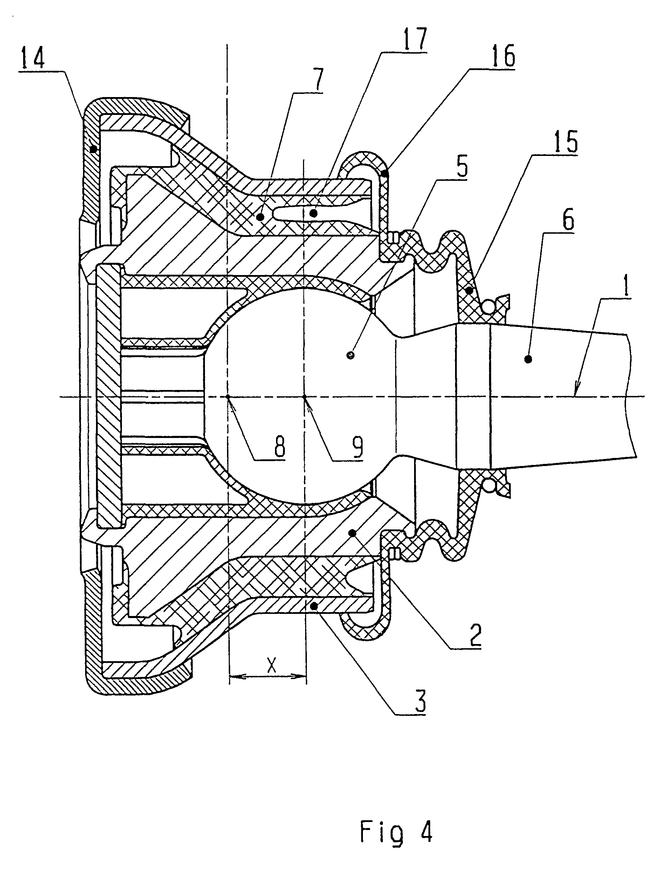

In der Figur 4 ist eine weitere mögliche Ausführung eines erfindungsgemäßen Kugelgelenkes mit einer auf der dem Gelenkzapfen 6 gegenüberliegenden Seite verschlossenen Ausbildung dargestellt. Das Lager ist hier stirnseitig mit einem Deckel 14 versehen. Dadurch wird neben der Verhinderung des Eindringens von Verunreinigungen in das Lager auch erreicht, daß Axialkräfte in entgegengesetzten Richtungen aufgenommen werden können.
Entsprechend dem Einsatzfall ist es auch denkbar, im Bereich der Gelenkkugel 5, also auf der Seite des Gelenkzapfens, eine konische Erweiterung des Lagers vorzusehen. Aus Montagegründen ist es hier aber nicht möglich, den maximalen Außendurchmesser des Innenteils 2 größer zu wählen als den minimalen Innendurchmesser des Außenteils 3, da ansonsten eine geteilte Aufnahme für das Lager verwendet werden müßte.
Eine weitere Möglichkeit besteht darin, in dem Elastomer 7 bereichsweise Unterbrechungen oder Ausnehmungen 17 vorzusehen und auf diese Weise die Gummihöhe 13 in einer für den Einsatzfall günstigen Weise an die auftretenden Kräfte anzupassen. Darüber hinaus ist bei einer erfindungsgemäßen Ausführung eines gummigelagerten Kugelgelenkes entsprechend der Darstellung in der Figur 4 auf der Zapfenaustrittsseite ein Dichtungsbalg 15 vorgesehen, der einerseits an dem Gelenkzapfen 6 und andererseits in einer Nut des Innenteiles 2 anliegt und eine zusätzliche Dichtungsbalgverlängerung 16 aufweist, die unmittelbar und bevorzugt einstückig an dem Dichtungsbalg 15 angeformt ist. Die Dichtungsbalgverlängerung 16 liegt endseitig dichtend an dem Außenteil 3 an.

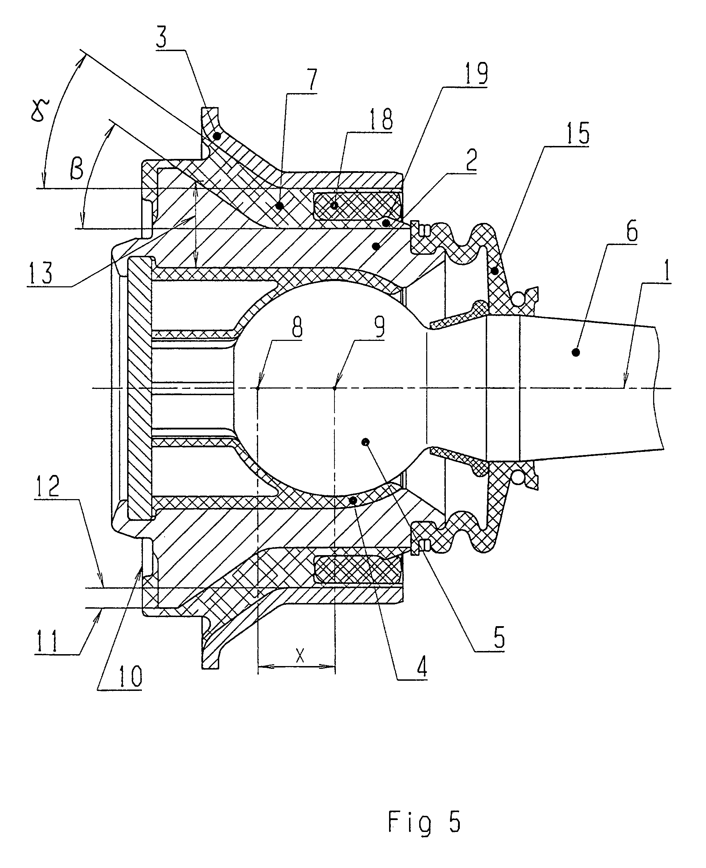

Die Figur 5 verdeutlicht nochmals die Geometrie eines weiterern erfindungsgemäßen Lagers anhand einer Schnittdarstellung mit einem durch die Lagerachse 1 geführten Schnitt. Mit der an seinem Ende ausgebildeten Gelenkkugel 5 ist ein Gelenkzapfen 6 in der Lagerschale 4 des Innenteils 2 eines Gummimetallagers gelagert. Dieses Innenteil 2 bildet gleichzeitig das Gehäuse des Kugelgelenks. Zwischen dem Innen- und Außenteil 2, 3 des Lagers ist ein Elastomer 7 in bekannter Weise eingeordnet. Der Gelenkzapfen 6 des Kugelgelenks kann entsprechend der an ihm radial angreifenden Kräfte im Winkel α ausschwenken. Um die Größe des Ausschwenkwinkels α zu bewahren, kommt eine Verlängerung des Lagers auf der Seite des Gelenkzapfens 6 nicht in Betracht. Das erfindungsgemäße Lager wurde daher auf der dem herausragenden Gelenkzapfen 6 gegenüberliegenden Seite verlängert.
Bei der in Figur 5 dargestellten Ausführung eines erfindungsgemäßen Lagers ist auf der Seite des Gelenkzapfens 6 ein weichelastischer Einsatz 18 in das Elastomer eingefügt, der vorliegend aus einem ringförmigen Bauteil besteht. Dieser Einsatz kann zusätzliche, in der Figur 5 nicht dargestellte Ausnehmungen 18.1 aufweisen. Um ein selbsttätiges Lösen des Einsatzes vornehmlich in axialer Richtung zu verhindern ist ferner eine Materialanhäufung 19 in Form einer umlaufenden Ringwulst in das Elastomer 7 eingeformt, die in eine komplementäre Ausnehmung 20 des Einsatzes 18 eingreift. Der ringförmige Einsatz 18 ist bei der in Figur 5 gezeigten Ausführung eines erfindungsgemäßen Lagers axial innen angephast, sodaß dadurch die Montage erleichtert wird.
Durch die erfindungsgemäße Lagergeometrie ergibt sich in Bezug auf einwirkende Radialkräfte eine gleichmäßige Spannungsverteilung im Elastomer 7.

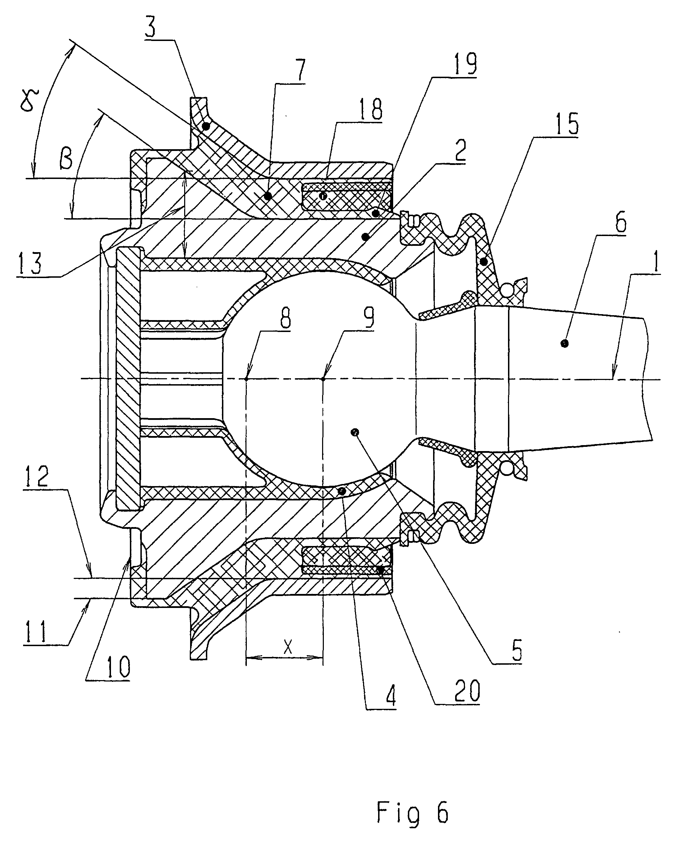

Figur 6 zeigt darüber hinaus eine mit dem in der Figur 5 dargestellten Lager überwiegend baugleiche Ausführung. Im Unterschied zu der zuvor beschriebenen Variante besteht der Einsatz 18 jedoch vorliegend aus zwei Komponenten, wobei die Schicht 20 auf der mit dem Elastomer zusammenwirkenden Seite, eine Rauheit aufweist, die zu einem Reibschluß zwischen Elastomer 7 und Einsatz 18 führt, sodaß der Einsatz in seiner Aufnahme gegen selbsttätiges Lösen gesichert ist.

### Bezugszeichenliste:

- 1: Lagerachse
- 2: Innenteil
- 3: Außenteil
- 4: Lagerschale
- 5: Gelenkkugel
- 6: Gelenkzapfen
- 7: Elastomer
- 8: Drehpunkt
- 9: Drehpunkt
- 10: Anschlagfläche
- 11: Außendurchmesser Innenteil
- 12: Innendurchmesser Außenteil
- 13: Höhe
- 14: Deckel
- 15: Dichtungsbalg
- 16: Dichtungsbalgverlängerung
- 17: Ausnehmung
- 18: Einsatz
- 18.1: Ausnehmung
- 19: Materialanhäufung
- 20: Schicht

- α: Schwenkwinkel
- β: Neigungswinkel
- χ: Neigungswinkel
- M1-M3: Drehmoment
- X: Versatz

## Patentansprüche

1. Gummigelagertes Kugelgelenk mit spannungsoptimierter Lagergeometrie bestehend aus einem axialsymmetrischen Lager, dessen Innenteil (2) gegen das Außenteil (3) durch ein Elastomer (7) isoliert ist und einem in dem Innenteil (2) mit einer an seinem Ende ausgebildeten Gelenkkugel (5) gelagerten Gelenkzapfen (6),
**dadurch gekennzeichnet, daß**
der Drehpunkt (8) des Lagers, welches an seiner dem aus dem Lager herausragenden Gelenkzapfen (6) gegenüberliegenden Seite über den Radius der Gelenkkugel (5) hinaus verlängert ist und der Drehpunkt (9) des in dem Innenteil gelagerten Gelenkzapfens (6) in axialer Richtung gegeneinander einen Versatz X aufweisen, wobei das Innenteil (2) des Lagers hinsichtlich seiner Außenkontur mit einem Neigungswinkel β gegen die Lagerachse (1) und das Außenteil (3) hinsichtlich seiner Außen- und Innenkontur mit einem Neigungswinkel χ gegen die Lagerachse (1) auf der Seite der Lagerverlängerung konisch erweitert sind.

2. Gummigelagertes Kugelgelenk nach Anspruch 1,
**dadurch gekennzeichnet, daß**
sich die Außenkontur des Innenteils (2) etwa im Bereich des Drehpunktes (8) des Lagers beginnend konisch in Richtung der Lagerverlängerung erweitert.

3. Gummigelagertes Kugelgelenk nach Anspruch 1 oder 2,
**dadurch gekennzeichnet, daß**
der Neigungswinkel β der konischen Erweiterung der Außenkontur des Innenteils (2) geringer ist als der Neigungswinkel χ der konischen Erweiterung des Außenteils (3).

4. Gummigelagertes Kugelgelenk nach Anspruch 1 oder 2,
**dadurch gekennzeichnet, daß**
der Neigungswinkel β der konischen Erweiterung der Außenkontur des Innenteils (2) und/oder Neigungswinkel χ der konischen Erweiterung des Außenteils (3) bereichs weise variieren.

5. Gummigelagertes Kugelgelenk nach einem der Ansprüche 1 bis 4,
**dadurch gekennzeichnet, daß**
in dem zwischen dem Innenteil (2) und dem Außenteil (3) eingeordneten Elastomer (7) bereichsweise Ausnehmungen ausgebildet sind.

6. Gummigelagertes Kugelgelenk nach einem der Ansprüche 1 bis 4,
**dadurch gekennzeichnet, daß**
an dem Innenteil (2) und / oder dem Außenteil (3) zumindest abschnittsweise flache oder ebene Bereiche vorhanden sind.

7. Gummigelagertes Kugelgelenk nach einem der Ansprüche 1 bis 6,
**dadurch gekennzeichnet, daß**
das Lager eine Ausfallsicherung aufweist, derart, daß der maximale Außendurchmesser (11) seines Innenteils (2) größer ist, als der minimale Innendurch messer (12) des Außenteils (3).

8. Gummigelagertes Kugelgelenk nach einem der Ansprüche 1 bis 7,
**dadurch gekennzeichnet, daß**
an der dem herausragenden Gelenkzapfen (6) gegenüberliegenden Stirnseite des Lagers zur Aufnahme axial wirkender Kräfte eine Anschlagfläche (10) für das Innenteil (2) ausgebildet ist.

9. Gummigelagertes Kugelgelenk nach einem der Ansprüche 1 bis 8,
**dadurch gekennzeichnet, daß**
das Innenteil (2) und das Außenteil (3) des Lagers beidseitig konisch erweitert sind.

10. Gummigelagertes Kugelgelenk nach einem der Ansprüche 1 bis 8,
**dadurch gekennzeichnet, daß**
das Kugelgelenk wenigstens einseitig einen Dichtungsbalg (15) mit einer daran angeformten Dichtungsbalgverlängerung (16) aufweist, der das Kugelgelenk dichtend verschließt.

11. Gummigelagertes Kugelgelenk mit spannungsoptimierter Lagergeometrie nach einem der vorstehend genannten Ansprüche,
**dadurch gekennzeichnet, daß**
wenigstens auf einer Seite des Kugelgelenkes mindestens ein Einsatz (18) mit einer verglichen mit dem Elastomer (7) geringeren Shorehärte in das Elastomer (7) eingefügt ist.

12. Gummigelagertes Kugelgelenk nach Anspruch 11,
**dadurch gekennzeichnet, daß**
mehrere Einsätze über den Umfang des Elastomers (7) verteilt angeordnet sind.

13. Gummigelagertes Kugelgelenk nach Anspruch 11 oder 12,
**dadurch gekennzeichnet, daß**
der wenigstens eine Einsatz (18) in das Elastomer (7) einvulkanisiert oder eingeklebt ist.

14. Gummigelagertes Kugelgelenk nach Anspruch 11 oder 12,
**dadurch gekennzeichnet, daß**
der wenigstens eine Einsatz (18) in das Elastomer (7) eingesetzt ist.

15. Gummigelagertes Kugelgelenk nach Anspruch 14,
**dadurch gekennzeichnet, daß**
der Einsatz (18) aus mehreren Komponenten unterschiedlicher Rauheit besteht.

16. Gummigelagertes Kugelgelenk nach Anspruch 14,
**dadurch gekennzeichnet, daß**
der Einsatz (18) in dem Elastomer (7) durch eine Sicherungselement gegen selbsttätiges Lösen gesichert ist.

17. Gummigelagertes Kugelgelenk nach Anspruch 16,
**dadurch gekennzeichnet, daß**
das Sicherungselement eine Keilform aufweist und zwischen Einsatz (18) und Elastomer (7) eingefügt ist.

18. Gummigelagertes Kugelgelenk nach einem der vorhergehenden Ansprüche,
**dadurch gekennzeichnet, daß**
der wenigstens eine Einsatz (18) zumindest bereichsweise Ausnehmungen (18.1) aufweist.

19. Gummigelagertes Kugelgelenk nach einem der vorhergehenden Ansprüche,
**dadurch gekennzeichnet, daß**
der wenigstens eine Einsatz (18) zumindest an seinem gelenkinnenseitigen Randbereich angephast ist.

## Claims

1. A rubber-mounted ball-and-socket joint with tension-optimised bearing geometry, consisting of an axially symmetrical bearing, the inner part (2) of which is insulated relative to the outer part (3) by an elastomer (7), and a joint pin (6) mounted in the inner part (2) and having a joint ball (5) constructed at its end,
**characterised in that**
the centre of rotation (8) of the bearing, which is extended beyond the radius of the joint ball (5) at the opposite side of said bearing from the joint pin (6) projecting out thereof, and the centre of rotation (9) of the joint pin (6) mounted in the inner part are offset by X in the axial direction relative to one another, wherein, on the bearing extension side, the inner part (2) of the bearing is enlarged conically with regard to its outer contour with an angle of inclination β relative to the bearing axis (1) and the outer part (3) is enlarged conically with regard to its outer and inner contours with an angle of inclination x relative to the bearing axis (1).

2. A rubber-mounted ball-and-socket joint according to claim 1,
**characterised in that**
the outer contour of the inner part (2) is enlarged conically in the direction of the bearing extension, starting approximately in the area of the centre of rotation (8) of the bearing.

3. A rubber-mounted ball-and-socket joint according to claim 1 or claim 2,
**characterised in that**
the angle of inclination β of the conical enlargement of the outer contour of the inner part (2) is smaller than the angle of inclination x of the conical enlargement of the outer part (3).

4. A rubber-mounted ball-and-socket joint according to claim 1 or claim 2,
**characterised in that**
the angle of inclination p of the conical enlargement of the outer contour of the inner part (2) and/or the angle of inclination x of the conical enlargement of the outer part (3) vary zonally.

5. A rubber-mounted ball-and-socket joint according to one of claims 1 to 4,
**characterised in that**
recesses are formed zonally in the elastomer (7) arranged between the inner part (2) and the outer part (3).

6. A rubber-mounted ball-and-socket joint according to one of claims 1 to 4,
**characterised in that**
flat or planar areas are present on the inner part (2) and/or the outer part (3) at least on portions thereof.

7. A rubber-mounted ball-and-socket joint according to one of claims 1 to 6,
**characterised in that**
the bearing is secured against falling out in such a way that the maximum external diameter (11) of its inner part (2) is larger than the minimum internal diameter (12) of the outer part (3).

8. A rubber-mounted ball-and-socket joint according to one of claims 1 to 7,
**characterised in that**
a stop face (10) for the inner part (2) is constructed on the opposite end face of the bearing from the projecting joint pin (6), to absorb axially acting forces.

9. A rubber-mounted ball-and-socket joint according to one of claims 1 to 8,
**characterised in that**
the inner part (2) and the outer part (3) of the bearing are enlarged conically on both sides.

10. A rubber-mounted ball-and-socket joint according to one of claims 1 to 8,
**characterised in that**
the ball-and-socket joint comprises sealing bellows (15) on at least one side, with a sealing bellows extension (16) moulded thereon, which sealing bellows (15) close the ball-and-socket joint in sealing manner.

11. A rubber-mounted ball-and-socket joint with tension-optimised bearing geometry according to one of the above-mentioned claims,
**characterised in that**
at least one insert (18) with a lower Shore hardness than the elastomer (7) is inserted into the elastomer (7) at least on one side of the ball-and-socket joint.

12. A rubber-mounted ball-and-socket joint according to claim 11,
**characterised in that**
a plurality of inserts are distributed over the circumference of the elastomer (7).

13. A rubber-mounted ball-and-socket joint according to claim 11 or claim 12,
**characterised in that**
the insert (18), of which there is at least one, is vulcanised or adhesively bonded into the elastomer (7).

14. A rubber-mounted ball-and-socket joint according to claim 11 or claim 12,
**characterised in that**
the insert (18), of which there is at least one, is mounted in the elastomer (7).

15. A rubber-mounted ball-and-socket joint according to claim 14,
**characterised in that**
the insert (18) consists of a plurality of components of varying roughness.

16. A rubber-mounted ball-and-socket joint according to claim 14,
**characterised in that**
the insert (18) is secured in the elastomer (7) by a securing element against becoming automatically detached.

17. A rubber-mounted ball-and-socket joint according to claim 16,
**characterised in that**
the securing element is wedge-shaped and is inserted between insert (18) and elastomer (7).

18. A rubber-mounted ball-and-socket joint according to one of the preceding claims,
**characterised in that**
the insert (18), of which there is at least one, comprises recesses (18.1) at least zonally.

19. A rubber-mounted ball-and-socket joint according to one of the preceding claims,
**characterised in that**
the insert (18), of which there is at least one, is chamfered at least at its edge area on the inside of the joint.

## Revendications

1. Articulation à rotule à montage caoutchouc, à géométrie d'appui optimisée en contrainte, constituée d'un appui à symétrie axiale, dont une pièce intérieure (2) est isolée de la pièce extérieure (3) au moyen d'un élastomère (7), et d'un pivot d'articulation (6) monté dans la pièce intérieure (2) par une rotule d'articulation (5) réalisée à son extrémité,
**caractérisée en ce que**
le point de rotation (8) de l'appui, lequel est prolongé, sur son côté opposé au pivot d'articulation (6) en saillie hors de l'appui, au-delà du rayon de la rotule d'articulation (5), et le point de rotation (9) du pivot d'articulation (6) monté dans la pièce intérieure présentent un décalage X l'un vis-à-vis de l'autre suivant la direction axiale, la pièce intérieure (2) de l'appui étant évasée d'une manière conique, en ce qui concerne son contour extérieur, suivant un angle d'inclinaison β vis-à-vis de l'axe d'appui (1) et la pièce extérieure (3) étant, en ce qui concerne son contour extérieur et son contour intérieur, évasée d'une manière conique, du côté du prolongement de l'appui, suivant un angle d'inclinaison χ vis-à-vis de l'axe d'appui (1).

2. Articulation à rotule à montage caoutchouc suivant la revendication 1, **caractérisée en ce que** le contour extérieur de la pièce intérieure (2) s'évase d'une manière conique en direction du prolongement d'appui en commençant approximativement dans la zone du point de rotation (8) de l'appui.

3. Articulation à rotule à montage caoutchouc suivant la revendication 1 ou 2, **caractérisée en ce que** l'angle d'inclinaison β de l'évasement conique du contour extérieur de la pièce intérieure (2) est plus faible que l'angle d'inclinaison χ de l'évasement conique de la pièce extérieure (3).

4. Articulation à rotule à montage caoutchouc suivant la revendication 1 ou 2, **caractérisée en ce que** l'angle d'inclinaison β de l'évasement conique du contour extérieur de la pièce intérieure (2) et/ou l'angle d'inclinaison χ de l'évasement conique de la pièce extérieure (3) varient par zones.

5. Articulation à rotule à montage caoutchouc suivant l'une des revendications 1 à 4, **caractérisée en ce que** des évidements sont réalisés par zones dans l'élastomère (7) disposé entre la pièce intérieure (2) et la pièce extérieure (3).

6. Articulation à rotule à montage caoutchouc suivant l'une des revendications 1 à 4, **caractérisée en ce que** des zones plates ou planes sont présentes, au moins par segments, sur la pièce intérieure (2) et/ou la pièce extérieure (3).

7. Articulation à rotule à montage caoutchouc suivant l'une des revendications 1 à 6, **caractérisée en ce que** l'appui comporte une sécurité vis-à-vis d'une défaillance, d'une manière telle que le diamètre extérieur maximal (11) de sa pièce intérieure (2) est plus grand que le diamètre intérieur minimal (12) de la pièce extérieure (3).

8. Articulation à rotule à montage caoutchouc suivant l'une des revendications 1 à 7, **caractérisée en ce qu'**une surface de butée (10) pour la pièce intérieure (2) est réalisée, pour supporter des forces s'exerçant axialement, sur le côté frontal de l'appui qui est situé à l'opposé du pivot d'articulation (6) en saillie.

9. Articulation à rotule à montage caoutchouc suivant l'une des revendications 1 à 8, **caractérisée en ce que** la pièce intérieure (2) et la pièce extérieure (3) de l'appui sont évasées d'une manière conique des deux côtés.

10. Articulation à rotule à montage caoutchouc suivant l'une des revendications 1 à 8, **caractérisée en ce que** l'articulation à rotule comprend au moins d'un côté un soufflet d'étanchéité (15) comportant, réalisé au formage sur celui-ci, un prolongement de soufflet d'étanchéité (16) qui ferme d'une manière étanche l'articulation à rotule.

11. Articulation à rotule à montage caoutchouc à géométrie d'appui optimisée en contrainte suivant l'une des revendications indiquées précédemment, **caractérisée en ce qu'**au moins sur un côté de l'articulation à rotule, au moins une pièce rapportée (18) présentant une dureté Shore plus faible en comparaison de l'élastomère (7) est insérée dans l'élastomère (7).

12. Articulation à rotule à montage caoutchouc suivant la revendication 11, **caractérisée en ce que** plusieurs pièces rapportées sont disposées d'une manière répartie suivant la direction circonférentielle de l'élastomère (7).

13. Articulation à rotule à montage caoutchouc suivant la revendication 11 ou 12, **caractérisée en ce que** la pièce rapportée (18) ou chaque pièce rapportée est mise en place dans l'élastomère (7) à la vulcanisation ou par collage.

14. Articulation à rotule à montage caoutchouc suivant la revendication 11 ou 12, **caractérisée en ce que** la pièce rapportée (18) ou chaque pièce rapportée est posée dans l'élastomère (7).

15. Articulation à rotule à montage caoutchouc suivant la revendication 14, **caractérisée en ce que** la pièce rapportée (18) est constituée de plusieurs composants à rugosités différentes.

16. Articulation à rotule à montage caoutchouc suivant la revendication 14, **caractérisée en ce que** la pièce rapportée (18) est immobilisée dans l'élastomère (7) à l'encontre d'une séparation d'elle-même au moyen d'un élément de sécurité.

17. Articulation à rotule à montage caoutchouc suivant la revendication 16, **caractérisée en ce que** l'élément de sécurité comporte une forme en coin et est inséré entre la pièce rapportée (18) et l'élastomère (7).

18. Articulation à rotule à montage caoutchouc suivant l'une des revendications précédentes, **caractérisée en ce que** la pièce rapportée (18) ou chaque pièce rapportée comporte des évidements (18.1) au moins par zones.

19. Articulation à rotule à montage caoutchouc suivant l'une des revendications précédentes, **caractérisée en ce que** la pièce rapportée (18) ou chaque pièce rapportée est chanfreinée au moins sur sa zone marginale du côté intérieur de l'articulation.
